# FASCICULE DE BREVET EUROPEEN

(11) **EP 1 194 288 B1**
(45) Date de publication et mention de la délivrance du brevet: **14.07.2004**
(21) Numéro de dépôt: 00945999.1
(22) Date de dépôt: 23.06.2000
(51) Int. Cl.: B32B 17/10, F41H 5/04, C03C 27/12

(54) **VITRAGE FEUILLETE BLINDE, EN PARTICULIER POUR VEHICULES AUTOMOBILES**
PANZERVERBUNDGLASSCHEIBE, INSBESONDERE FÜR KRAFTFAHRZEUGE
ARMOURED LAMINATED GLAZING, IN PARTICULAR FOR MOTOR VEHICLES

(30) Priorité: 25.06.1999 FR 9908154
(43) Date de publication de la demande: 10.04.2002
(73) Titulaire: Saint-Gobain Glass France, 92400 Courbevoie (FR)
(72) Inventeur: CHAUSSADE, Pierre, F-45100 Orléans (FR); GOURIO, Noel, F-45000 Orléans (FR); LEHRMANN, Hervé, F-45100 Orléans (FR)
(74) Mandataire: Chaillot, Geneviève
(86) Numéro de dépôt international: PCT/FR2000/001762
(87) Numéro de publication internationale: WO 2001/000403

(56) Documents cités:
- WO-A-99/39152
- DE-A- 4 142 416
- DE-A- 4 415 879
- DE-A- 19 745 248
- DE-C- 19 729 897
- FR-A- 2 764 841
- US-A- 3 616 122
- US-A- 4 277 294

## Description

La présente invention est relative à un vitrage feuilleté blindé, pare-balles et/ou anti-éclats, pouvant être mis en oeuvre pour la protection de véhicules de transport routier, ferroviaire, maritime ou aérien, notamment de véhicules automobiles tels que véhicules blindés particuliers, militaires ou pour le transport de fonds. Le vitrage feuilleté blindé de la présente invention peut cependant être également mis en oeuvre pour la protection de bâtiments. Ces vitrages peuvent par ailleurs être fixes ou mobiles.

D'importants efforts ont été accomplis en vue d'améliorer la résistance des vitrages blindés, notamment vis-à-vis de balles de plus en plus performantes et d'impacts de plus en plus puissants et concentrés sur une faible surface.

Dans une approche antérieure pour améliorer les performances balistiques de ces vitrages, la Société déposante a proposé, dans sa demande de brevet français FR-A-2 764 841, un vitrage feuilleté blindé pare-balles et/ou anti-éclats, comportant, sur au moins une partie de sa périphérie, une ou plusieurs excroissances rigides, chacune de celles-ci appartenant sensiblement à un plan parallèle à la surface définie par le vitrage ou au prolongement de cette surface, et ayant une épaisseur lui permettant d'être introduite au moins en partie, temporairement ou à demeure, dans la feuillure de la baie du vitrage.

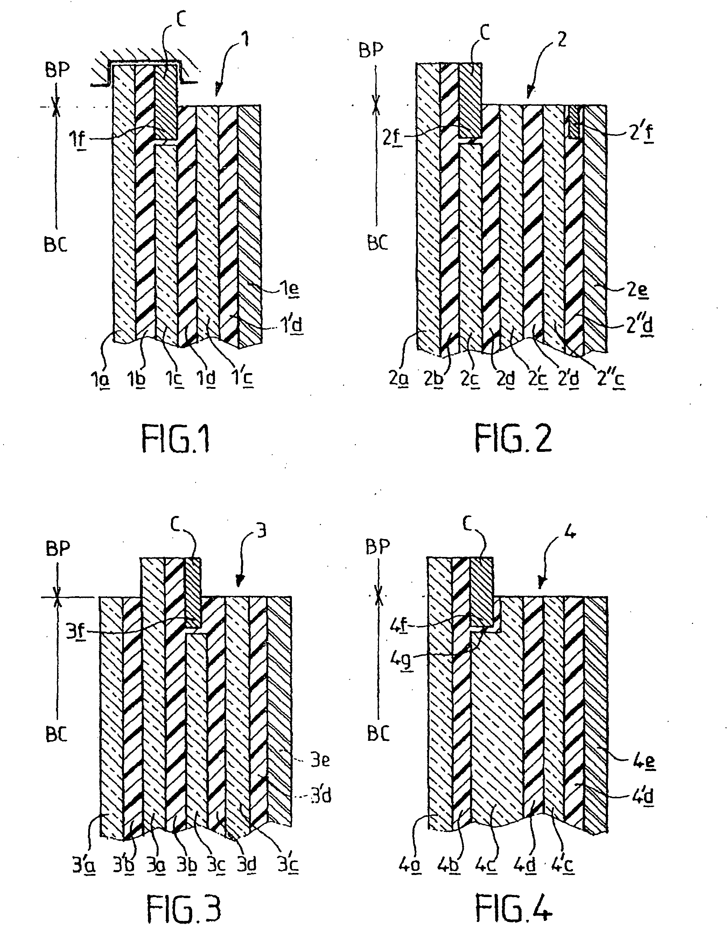

Le mode de réalisation le plus performant de la demande française précitée FR-A-2 764 841, est celui qui est illustré sur la Figure 4 de cette dernière. Il est constitué, de l'extérieur vers l'intérieur (dans la présente description, le côté extérieur est le côté par lequel l'impact est susceptible de se produire), par :
① une feuille de verre renforcé chimiquement (ou un empilement feuille de verre - couche adhésive intercalaire de polyvinylbutyral (PVB) - feuille de verre) ;
② un empilement de feuilles formé par :
   ②a une couche adhésive intercalaire de PVB ;
   ②b une feuille de verre ;
   ②c une couche adhésive intercalaire de PVB ;
   ②d une couche de verre ;
   ②e une couche adhésive intercalaire de polyuréthanne (PU) ; et
   ②f une feuille de polycarbonate dont la face intérieure est en général revêtue d'un vernis anti-rayures.

L'empilement ② a une surface inférieure à celle de la feuille ou empilement ① de telle sorte que la périphérie de cette feuille ou empilement ① s'étend uniformément au-delà de celle de l'empilement ②. Une ceinture périphérique vient s'appliquer contre, et est solidarisée, par exemple par collage, d'avec, la face interne de la feuille ou empilement ① qui fait saillie hors de l'empilement ②. Cette ceinture périphérique est également solidarisée, par exemple par collage, le long de sa bordure interne, d'avec la bordure externe de l'empilement ② contre laquelle elle est en appui.

L'ensemble constitué par la ceinture périphérique et la zone périphérique de la feuille ou de l'empilement ① peut être introduit dans la feuillure d'une baie ou simplement posé en appui et plus ou moins emboîté relativement à la structure de cette baie orientée vers l'extérieur selon les formes de baies employées.

Se trouve ainsi constitué un dispositif de vitrage feuilleté blindé comportant deux systèmes balistiques juxtaposés, à savoir :
- un premier système balistique, central, constitué par l'empilement ② et par la zone centrale de la feuille ① ou de l'empilement ① en regard dudit empilement ② ; et
- un second système balistique, périphérique, constitué par la ceinture périphérique et par la zone périphérique de la feuille ① ou de l'empilement ① en regard de ladite ceinture périphérique.

Le vitrage feuilleté blindé conforme à la demande française précitée donne toute satisfaction par rapport aux vitrages blindés connus, en résistant à des projectiles plus performants, à des impacts plus puissants et plus nombreux, qu'ils soient simultanés ou consécutifs.

Cependant, ce vitrage feuilleté blindé présente une faiblesse de la zone de bord, autrement dit de la zone de jonction-entre les deux systèmes balistiques, central et périphérique, qui viennent d'être décrits. Cette zone peut, en pratique, avoir une largeur de l'ordre de 0,5 à 3 cm, et peut donc être visée et atteinte par un tireur.

Il va de soi que cette faiblesse de la zone de bord doit être supprimée de la façon la plus radicale possible, sachant par ailleurs que l'excroissance d'insertion du vitrage dans sa feuillure est de faible hauteur (de l'ordre de 1 à quelques cm pour les vitrages automobiles) et que l'on ne souhaite pas utiliser un blindage de recouvrement par la structure qui porte le vitrage (carrosserie) pour ne pas perdre de clair de glace et pour des raisons de coût.

La présente invention répond à cet objectif. A cet effet, il est proposé que la ceinture de blindage, à haute résistance balistique, faisant partie du second système balistique précité se prolonge vers l'intérieur pour former au moins une couche balistique s'intégrant au premier système balistique, sur une longueur susceptible de couvrir ladite zone de bord plus faiblement protégée. Il a été ainsi possible de constituer diverses formes de réalisation permettant de répondre à des exigences particulières de protection, notamment pour renforcer cette protection, et également permettant d'adapter le vitrage feuilleté blindé sur des châssis existants (en particulier de répondre aux contraintes d'épaisseur des feuillures de baies d'automobiles).

La présente invention a donc pour objet un vitrage en verre feuilleté blindé, pare-balles et/ou anti-éclats, dans lequel une partie de l'empilement constituant ledit vitrage s'étend, sur au moins une partie de la périphérie du vitrage, au-delà du reste dudit empilement, formant ainsi une excroissance contre laquelle est appliquée, du côté intérieur si l'on considère que l'impact est susceptible de se produire du côté extérieur, une ceinture de blindage en matériau à haute résistance balistique, rendue solidaire dudit vitrage, ce par quoi il est constitué :
- un système balistique périphérique (BP), formé par ladite excroissance et ladite ceinture (C), système par lequel le vitrage est monté dans la feuillure de la structure destinée à porter ledit vitrage ;
- le reste dudit vitrage constituant alors un système balistique central (BC),
caractérisé par le fait que le système balistique central (BC) comporte, dans sa région périphérique correspondant à celle de la ceinture de blindage (C) du système balistique périphérique (BP), une ou plusieurs couches de renfort de blindage, en matériau à haute résistance balistique, s'intégrant dans l'empilement constituant ledit vitrage, l'unique couche de renfort de blindage ou au moins l'une desdites couches de renfort de blindage, suivant qu'il y en a une ou plusieurs, étant solidaire d'avec ladite ceinture (C).

La région périphérique du système balistique central (BC) correspondant à celle de la ceinture de blindage (C) du système balistique périphérique (BP) ne comporte généralement pas de couche de renfort de blindage du côté du vitrage extérieur par rapport à ladite ceinture (C).

De façon particulièrement préférée, le vitrage feuilleté blindé de la présente invention est constitué par un empilement de feuilles de verre en alternance avec des couches adhésives intercalaires, en commençant par une feuille de verre du côté extérieur et en terminant du côté intérieur également par une feuille de verre, la ceinture de blindage (C), la ou les couches de renfort de blindage et le cas échéant les éléments de liaison entre ladite ceinture (C) et ladite ou lesdites couches de renfort de blindage étant intégrés dans ledit vitrage par l'intermédiaire de la ou des couches adhésives intercalaires ou par une partie de celles-ci ou par une matière adhésive intercalaire, notamment du type de celles-ci constituant lesdites couches adhésives intercalaires.
- Conformément à un premier mode de réalisation du vitrage feuilleté blindé de la présente invention, ce dernier comporte une couche de renfort de blindage se situant dans le prolongement de la ceinture de blindage (C) et étant d'un seul tenant avec elle.

La couche de renfort de blindage formant le prolongement de la ceinture de blindage (C) peut alors occuper la place qui était normalement occupée par une feuille de verre faisant partie du système balistique central (BC), ou encore être décalée dans l'espace par rapport à une feuille de verre.

Dans le premier cas, l'élément de blindage formé par la ceinture de blindage (C) et son prolongement peut être de même largeur que ladite feuille de verre et disposé au droit de celle-ci, auquel cas ladite feuille de verre a été simplement raccourcie. L'élément de blindage peut également avoir une largeur inférieure à celle de ladite feuille de verre, auquel cas ladite feuille de verre a été simplement raccourcie et l'espace qui était normalement occupé par le verre est rempli par de la matière intercalaire adhésive, ou encore ladite feuille de verre comporte un lamage dans lequel s'intègre ledit prolongement de la ceinture de blindage, ladite feuille de verre comportant le lamage pouvant avoir une plus grande épaisseur que les autres feuilles de verre de l'empilement.

On peut également prévoir, toujours conformément à ce premier mode de réalisation, que le vitrage comporte au moins une couche de renfort de blindage qui est intégrée au sein de la structure feuilletée et qui est indépendante ou non du prolongement de la ceinture de blindage (C). Dans ce cas, selon une première variante, au moins une couche de renfort de blindage est disposée au sein d'une couche intermédiaire adhésive entre deux feuilles de verre. Et selon une deuxième variante, au moins une couche de renfort de blindage se présente sous la forme d'un insert ou d'une cale pouvant s'étendre sur une distance au plus égale à la distance entre le prolongement de la ceinture de blindage (C) et le côté intérieur du vitrage.
- Conformément à un second mode de réalisation du vitrage feuilleté blindé de la présente invention, ce dernier comporte au moins une couche de renfort de blindage qui est reliée à la ceinture (C) par une partie annulaire en appui contre la périphérie du vitrage au niveau du système balistique central (BC), la ou les couches de renfort de blindage étant situées entre le prolongement de la .ceinture (C) et le côté intérieur du vitrage, la ou une couche de blindage pouvant être appliquée contre le côté intérieur du vitrage, ladite ceinture (C) pouvant également présenter un prolongement formant couche de renfort de blindage au sein dudit système balistique central (BC), ladite partie annulaire étant liée à la structure du vitrage par l'intermédiaire d'une matière intercalaire adhésive.

Par ailleurs, l'excroissance formant avec la ceinture de blindage (C) le système balistique périphérique (BP) est généralement formée à la bordure extérieure ou au voisinage de la bordure extérieure du vitrage.

Le ou les matériaux à haute résistance balistique qui composent le blindage du vitrage feuilleté blindé selon la présente invention sont des matériaux qui, à menaces égales, sont de 2 à 10 fois moins épais que le verre pour être étanches aux balles. Ils sont choisis en particulier parmi les métaux et alliages métalliques, tels que l'acier, les composites matière plastique-fibres et les céramiques. Les fibres entrant dans la constitution des composites sont en particulier les fibres de verre, d'aramide ou de céramique, et un exemple de matière plastique des composites et le polyéthylène.

Conformément à une forme de réalisation particulièrement préférée du vitrage feuilleté blindé selon l'invention, l'empilement de couches et feuilles est plat ou bombé et comprend, de l'extérieur vers l'intérieur :
(a) une feuille de verre, en particulier de type vitrocéramique, verre recuit ou verre renforcé chimiquement ou thermiquement ;
(b) une couche adhésive intercalaire ;
(c) une feuille de verre, en particulier de type verre recuit ou verre renforcé chimiquement ou thermiquement ;
(d) une couche adhésive intercalaire, le cas échéant au moins un autre sous-empilement de type (c), (d) dans cet ordre ; et
(e) une couche de polycarbonate (PC),
les couches adhésives intermédiaires étant notamment en une matière telle que le polyvinylbutyral (PVB) et le polyuréthanne (PU),
ledit empilement pouvant également inclure toute couche mince fonctionnelle traditionnelle, en particulier à fonction colorante, optique, anti-solaire, anti-salissure, anti-rayures, anti-givre, et/ou tout réseau de fils conducteurs d'antenne ou chauffants, et/ou tout revêtement de bordure d'émail ou peinture opaque en particulier sous forme de points.

La fabrication des vitrages feuilletés blindés de la présente invention est classique et comporte l'étape éventuelle de bombage des plis de verre, la constitution du feuilleté par la superposition des plis ou feuilles de verre et des couches intermédiaires dans l'ordre choisi, l'assemblage et le passage à l'autoclave pour application de chaleur et pression. Dans le cas de l'invention, dans la constitution du feuilleté, les éléments de blindage et de renfort de blindage qui viennent d'être décrits sont intégrés à l'ensemble.

La ou les couches de renfort de blindage s'étendent, à l'intérieur du système balistique central (BC), sur une distance de l'ordre de 0,5 - 3 cm, en particulier dans le cas où le vitrage selon l'invention est destiné à constituer un vitrage latéral de véhicule automobile.

En outre, le système balistique périphérique (BP) et son renfort associé s'étend généralement sur tout le pourtour du vitrage. Il peut cependant ne pas s'étendre le long d'une zone de bordure qui ne comporterait pas de feuillure.

La hauteur de l'excroissance d'insertion du vitrage dans la feuillure de baie est généralement de l'ordre de 20 à 80% de la hauteur de (BP) et l'épaisseur du vitrage peut varier entre 10 et 70 mm.

Pour mieux illustrer l'objet de la présente invention, on va en décrire ci-après, à titre indicatif et non limitatif, plusieurs variantes de réalisation en référence au dessin annexé.

Sur ce dessin, les Figures 1 à 7 représentent chacune une vue schématique en coupe transversale partielle, à échelle agrandie, d'une de ces variantes, le plan de coupe passant par le ou les éléments constituant le blindage.

Les différentes feuilles et couches de la structure feuilletée n'ont pas été représentées à l'échelle, certaines, en particulier les couches intermédiaires adhésives étant souvent plus larges que dans la réalité, afin de montrer leur emplacement dans la structure. Les différentes plages de dimensions de la structure feuilletée de base et les valeurs relatives des dimensions des différentes feuilles et couches qui la composent sont des valeurs bien connues de l'homme du métier spécialiste des vitrages feuilletés. Dans ce qui suit, ces dimensions n'ont donc été données qu'à titre indicatif.
- Si l'on se réfère à la Figure 1, on peut voir que l'on a désigné par 1 dans son ensemble un vitrage feuilleté blindé, qui est constitué, de l'extérieur vers l'intérieur :
   - d'une feuille 1a de vitrocéramique ou de verre recuit ou renforcé chimiquement ou thermiquement, de 6 mm d'épaisseur ;
   - d'une couche adhésive intercalaire 1b, de PVB, de 0,76 mm d'épaisseur ;
   - d'une feuille 1c de verre recuit ou renforcé chimiquement ou thermiquement, de 3 mm d'épaisseur ;
   - d'une couche adhésive intercalaire 1d, de PVB, de 0,76 mm d'épaisseur ;
   - un sous-empilement 1'c, 1'd identique au sous-empilement précédent excepté que la couche adhésive intercalaire 1'd est en PU ; et
   - une feuille 1e de polycarbonate (PC) de 3 mm d'épaisseur.

La face intérieure de la feuille 1e peut avantageusement être revêtue d'un vernis anti-rayures, par exemple à base de polysiloxane, sur une épaisseur au plus égale à 15 µm, en particulier de 2 à 7 µm.

Toutes ces feuilles et couches allant de 1a à 1e sont transparentes.

La feuille 1a extérieure et la couche 1b extérieure s'étendent en périphérie au-delà de l'empilement 1c à 1e dont les couches et feuilles sont de même surface, excepté la feuille 1c qui est de surface encore plus petite.

Un élément de blindage, en acier balistique, de même largeur que la feuille 1c, est introduit entre les couches 1b et 1d et collé contre ces couches ; son chant interne s'applique contre le chant de la feuille 1c en y étant collé par le PVB ; son chant externe se situe dans le prolongement du chant de l'empilement 1a, 1b.

Sur la Figure 1, on a indiqué par BC et BP les deux systèmes balistiques qui composent le vitrage feuilleté représenté et qui ont été définis ci-dessus en particulier avec référence à la Figure 4 de la demande de brevet français précitée. On a également indiqué par C la ceinture de blindage appartenant au système BP (qui est représenté sur cette figure introduit dans la feuillure de la baie), et se prolongeant au sein du système BC par ce que l'on a appelé la couche de renfort de blindage (1f), afin de former ledit élément de blindage.

Sur chacune des autres figures qui représentent d'autres variantes, on a utilisé les mêmes notations avec les chiffres respectivement 2 à 7. On ne reprendra ici que la description des parties différentes.
- Sur la Figure 2, on note, par rapport à la variante de la Figure 1, la présence d'un empilement supplémentaire 2"c et 2"d, la couche 2'd étant en PVB et la couche 2"d, en PU. A par ailleurs été disposée au sein de la couche 2"c une couche de renfort de blindage supplémentaire 2'f, dans la région périphérique du système BC dans laquelle s'étend la couche 2f.
- Sur la Figure 3, on note, par rapport à la variante de la Figure 1, la présence d'un empilement supplémentaire 3'a, 3'b, de sorte qu'au montage, il y aura affleurement vitrage-carrosserie. On note également une couche 3f de moindre épaisseur que la feuille de verre 3c ; dans ce cas, une bande supplémentaire de PVB a été appliquée contre la face extérieure de la couche 3f dans la région périphérique du système BC, pour assurer la compensation.
- Sur la Figure 4, on note, par rapport à la variante de la Figure 1, la présence d'une feuille de verre 4c plus large, laquelle comporte un lamage 4g pour recevoir la partie correspondante de la couche 4f. Comme dans la variante de la Figure 3, on a assuré le collage longitudinal entre la couche 4f et la feuille de verre 4c par du PVB.

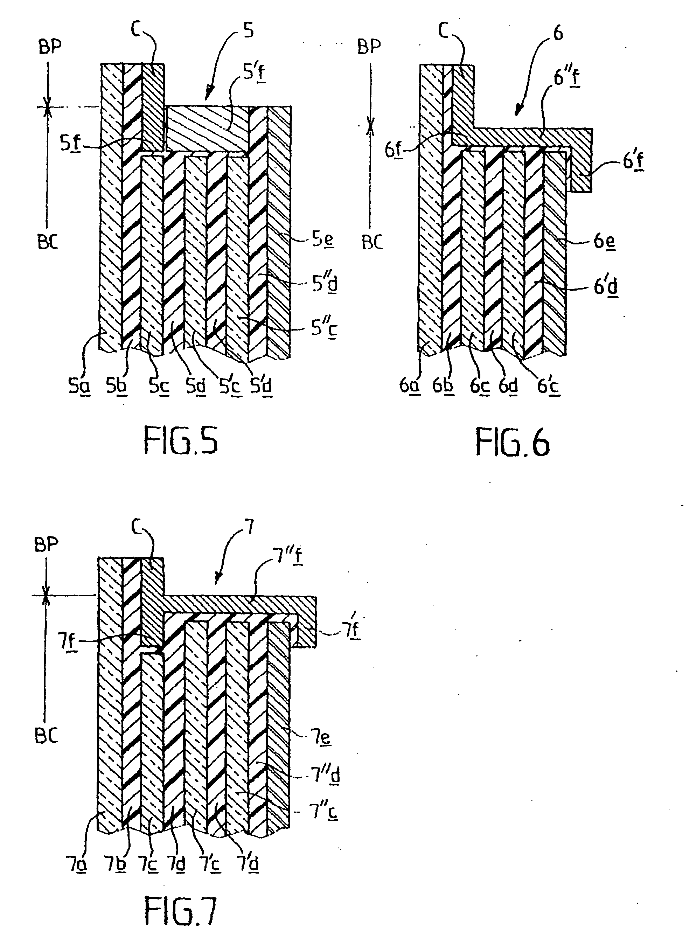

- Sur la Figure 5, on note, par rapport à la variante de la Figure 2, la présence d'une cale ou insert 5'f en composite matière plastique-fibres, entre les couches 5f et 5"d dans la région périphérique du système BC. On a assuré le collage du chant interne de la cale 5'f aux chants des feuilles 5'c et 5"c par du PVB, de même qu'entre les éléments 5f et 5'f.
- Sur la Figure 6, on note, par rapport à la variante de la Figure 1, que la couche 6f est décalée pour se rapprocher de la couche 6a, et qu'elle se prolonge en étant repliée deux fois d'équerre pour former une partie annulaire 6"f s'appliquant contre les feuilles 6c, 6'c, les couches 6d, 6'd et la feuille 6e, et un retour 6'f s'appliquant contre la couche 6e dans la région périphérique du système BC. Du PVB a assuré le collage des parties 6'f et 6"f.
- Sur la Figure 7, on note, par rapport à la variante de la Figure 6, un empilement supplémentaire 7"c, 7"d et un prolongement de la ceinture C par la couche 7f au sein du feuilleté comme pour la variante de la Figure 1 notamment.

Les vitrages conformes à ces variantes ont tous résisté à des impacts de balles tirées dans la zone de bord qui constituait auparavant une zone de fragilité du blindage.

Il est bien entendu que les modes de réalisation qui viennent d'être décrits ont été donnés à titre indicatif et non limitatif et que des modifications peuvent être apportées sans que l'on s'écarte pour autant du cadre de la présente invention.

## Revendications

1. Vitrage en verre feuilleté blindé, pare-balles et/ou anti-éclats, dans lequel une partie de l'empilement constituant ledit vitrage s'étend, sur au moins une partie de la périphérie du vitrage, au-delà du reste dudit empilement, formant ainsi une excroissance contre laquelle est appliquée, du côté intérieur si l'on considère que l'impact est susceptible de se produire du côté extérieur, une ceinture de blindage (C) en matériau à haute résistance balistique, rendue solidaire dudit vitrage, ce par quoi il est constitué :
- un système balistique périphérique (BP), formé par ladite excroissance et ladite ceinture (C), système par lequel le vitrage est monté dans la feuillure de la structure destinée à porter ledit vitrage ;
- le reste dudit vitrage constituant alors un système balistique central (BC),
**caractérisé par le fait que** le système balistique central (BC) comporte, dans sa région périphérique correspondant à celle de la ceinture de blindage (C) du système balistique périphérique (BP), une ou plusieurs couches de renfort de blindage (1f à 7f ; 5'f ; 6'f ; 7'f) en matériau à haute résistance balistique, s'intégrant dans l'empilement constituant ledit vitrage, l'unique couche de renfort de blindage ou au moins l'une desdites couches de renfort de blindage, suivant qu'il y en a une ou plusieurs, étant solidaire d'avec ladite ceinture (C), en la prolongeant.

2. Vitrage selon la revendication 1, **caractérisé par le fait que** la région périphérique du système balistique central (BC) correspondant à celle de la ceinture de blindage (C) du système balistique périphérique (BP) ne comporte pas de couche de renfort de blindage du côté du vitrage extérieur par rapport à ladite ceinture (C).

3. Vitrage selon l'une des revendications 1 et 2, **caractérisé par le fait qu'** il constitué par un empilement de feuilles de verre en alternance avec des couches adhésives intercalaires, en commençant par une feuille de verre (1a à 7a) du côté extérieur et en terminant du côté intérieur également par une feuille de verre (1e à 7e), la ceinture de blindage (C), la ou les couches de renfort de blindage et le cas échéant les éléments de liaison entre ladite ceinture (C) et ladite ou lesdites couches de renfort de blindage étant intégrés dans ledit vitrage par l'intermédiaire de la ou des couches adhésives intercalaires ou par une partie de celles-ci ou par une matière adhésive interclaire.

4. Vitrage selon l'une des revendications 1 à 3, **caractérisé par le fait qu'**il comporte une couche de renfort de blindage (1f à 7f) se situant dans le prolongement de la ceinture de blindage (C) et étant d'un seul tenant avec elle.

5. Vitrage selon la revendication 4 prise en combinaison avec la revendication 3, **caractérisé par le fait que** la couche de renfort de blindage (1f à 7f) formant le prolongement de la ceinture de blindage (C) occupe la place qui était normalement occupée par une feuille de verre (1c, 2c, 3c, 4c, 5c, 7c) faisant partie du système balistique central (BC), ou encore est décalée dans l'espace par rapport à une feuille de verre (6c).

6. Vitrage selon la revendication 5, **caractérisé par le fait que** l'élément de blindage formé par la ceinture de blindage (C) et son prolongement (1f, 2f, 5f, 7f) est de même largeur que ladite feuille de verre (1c, 2c, 5c, 7c) et disposé au droit de celle-ci, auquel cas ladite feuille de verre a été simplement raccourcie.

7. Vitrage selon la revendication 5 prise en combinaison avec la revendication 3, **caractérisé par le fait que** l'élément de blindage formé par la ceinture de blindage (C) et son prolongement (3f, 4f) a une largeur inférieure à celle de ladite feuille de verre (3c, 4c), auquel cas ladite feuille de verre (3c) a été simplement raccourcie et l'espace qui était normalement occupé par le verre est rempli par de la matière intercalaire adhésive (3d), ou encore ladite feuille de verre (4c) comporte un lamage (4g) dans lequel s'intègre ledit prolongement (4f) de la ceinture de blindage (C), ladite feuille de verre (4c) comportant le lamage (4g) pouvant avoir une plus grande épaisseur que les autres feuilles de verre de l'empilement.

8. Vitrage selon l'une des revendications 4 à 7, **caractérisé par le fait qu'**il comporte au moins une couche de renfort de blindage (2'f) qui est intégrée au sein de la structure feuilletée et qui est indépendante ou non du prolongement de la ceinture de blindage (C).

9. Vitrage selon la revendication 8 prise en combinaison avec la revendication 3, **caractérisé par le fait qu'**au moins une couche de renfort de blindage (2f) est disposée au sein d'une couche intermédiaire adhésive (2"d) entre deux feuilles de verre (2"c, 2e).

10. Vitrage selon l'une des revendications 8 et 9, prise en combinaison avec la revendication 3, **caractérisé par le fait qu'**au moins une couche de renfort de blindage se présente sous la forme d'un insert (5'f) ou d'une cale pouvant s'étendre sur une distance au plus égale à la distance entre le prolongement (5f) de la ceinture de blindage (C) et le côté intérieur du vitrage.

11. Vitrage selon l'une des revendications 1 à 3, **caractérisé par le fait qu'**il comporte au moins une couche de renfort de blindage (6'f, 7'f) qui est reliée à la ceinture (C) par une partie annulaire (6"f ; 7"f) en appui contre la périphérie du vitrage au niveau du système balistique central (BC), la ou les couches de renfort de blindage (6'f ; 7'f) étant situées entre le prolongement de la ceinture (C) et le côté intérieur du vitrage, la ou une couche de blindage (7'f) pouvant être appliquée contre le côté intérieur du vitrage, ladite ceinture (C) pouvant également présenter un prolongement (7f) formant couche de renfort de blindage au sein dudit système balistique central (BC), ladite partie annulaire (6"f, 7"f) étant liée à la structure du vitrage par l'intermédiaire d'une matière intercalaire adhésive.

12. Vitrage selon l'une des revendications 1 à 11, **caractérisé par le fait que** l'excroissance formant avec la ceinture de blindage (C) le système balistique périphérique (BP) est formée à la bordure extérieure ou au voisinage de la bordure extérieure du vitrage.

13. Vitrage selon l'une des revendications 1 à 12, **caractérisé par le fait que** le matériau à haute résistance balistique est choisi parmi les métaux ou alliages métalliques, les composites matière plastique-fibres et les céramiques.

14. Vitrage selon l'une des revendications 1 à 13, **caractérisé par le fait que** l'empilement est plat ou bombé et comprend de l'extérieur vers l'intérieur :
(a) une feuille de verre, en particulier de type vitrocéramique, verre recuit ou verre renforcé chimiquement ou thermiquement ;
(b) une couche adhésive intercalaire ;
(c) une feuille de verre, en particulier de type verre recuit ou verre renforcé chimiquement ou thermiquement ;
(d) une couche adhésive intercalaire, le cas échéant au moins un autre sous-empilement de type (c), (d) dans cet ordre ; et
(e) une couche de polycarbonate,
les couches adhésives intermédiaires étant notamment en une matière telle que le polyvinylbutyral et le polyuréthanne, ledit empilement pouvant également inclure toute couche mince fonctionnelle traditionnelle, en particulier à fonction colorante, optique, anti-solaire, anti-salissure, anti-rayures, anti-givre, et/ou tout réseau de fils conducteurs d'antenne ou chauffants, et/ou tout revêtement de bordure d'émail ou peinture opaque en particulier sous forme de points.

15. Vitrage selon l'une des revendications 1 à 14, en particulier destiné à constituer un vitrage latéral de véhicule automobile, **caractérisé par le fait que** la ou les couches de renfort de blindage s'étendent à l'intérieur du système balistique central (BC) sur une distance de l'ordre de 0,5-3 cm.

## Patentansprüche

1. Panzerverbundglasscheibe, kugelsicher und/oder nichtsplitternd, bei der ein Teil des die genannte Scheibe bildenden Stapels sich über wenigstens einen Teil des Rands des Rests des die Scheibe bildenden Stapels hinaus erstreckt, so dass er einen Vorsprung bildet, auf dessen Innenseite - davon ausgehend, dass der Aufprall von außen erfolgt - sich eine Panzerungsleiste (C) aus einem Material von hoher ballistischer Festigkeit befindet, fest verbunden mit der genannten Scheibe, die also gebildet wird durch:
- ein den genannten Vorsprung und die genannte Leiste (C) umfassendes peripheres ballistisches System (BP), mittels dem die Scheibe in die Fuge der die Scheibe tragenden Struktur montiert wird,
- den Rest der genannten Scheibe, der ein zentrales ballistisches System (BC) bildet,
**dadurch gekennzeichnet,**
**dass** das zentrale ballistische System (BP) in seinem peripheren Bereich dem der Panzerungsleiste (C) des peripheren ballistischen Systems (BP) entspricht, wobei eine oder mehrere Panzerungsverstärkungsschichten (1f bis 7f ; 5'f ; 6'f ; 7'f) aus Material von hoher ballistischer Festigkeit in den die Scheibe bildenden Stapel integriert sind, und die einzige Panzerungsverstärkungsschicht oder wenigstens eine der Panzerungsverstärkungsschichten, abhängig davon, ob es eine oder mehrere gibt, fest verbunden ist mit der genannten Leiste (C), wobei diese durch sie verlängert wird.

2. Scheibe nach Anspruch 1, **dadurch gekennzeichnet, dass** der der Panzerungsleiste (C) des peripheren ballistischen Systems (BP) entsprechende periphere Bereich des zentralen ballistischen Systems (BC) keine Panzerungsverstärkungsschicht auf der in Bezug auf die genannte Leiste (C) äußeren Seite der Scheibe umfasst.

3. Scheibe nach einem der Ansprüche 1 und 2, **dadurch gekennzeichnet, dass** sie aus einem Stapel besteht, gebildet durch Glasplatten und klebende Zwischenschichten, beginnend mit einer Glasplatte (1a bis 7a) auf der Außenseite und endend mit einer Glasplatte (1e bis 7e) auf der Innenseite, wobei die Panzerungsleiste (C), die Panzerungsschicht oder -schichten und gegebenenfalls die Verbindungselemente zwischen der Leiste (C) und der oder den Panzerungsverstärkungsleisten in die Scheibe integriert sind mittels der oder den klebenden Zwischenschichten oder durch einen Teil von diesen oder durch ein klebendes Zwischenmaterial.

4. Scheibe nach einem der Ansprüche 1 bis 3, **dadurch gekennzeichnet, dass** sie eine Panzerungsverstärkungsschicht (1f bis 7f) umfasst, die sich in der Verlängerung der Panzerungsleiste (C) befindet und aus einem Stück mit ihr ist.

5. Scheibe nach Anspruch 4 in Verbindung mit Anspruch 3, **dadurch gekennzeichnet, dass** die Verstärkungsschicht (1f bis 7f), welche die Verlängerung der Panzerungsleiste (C) bildet, den Platz einnimmt, der normalerweise von einer Glasplatte (1c, 2c, 3c, 4c, 5c, 7c) eingenommen wird, die Teil des zentralen ballistischen Systems (BC) ist, oder auch räumlich verschoben ist in Bezug auf eine Glasplatte (6c).

6. Scheibe nach Anspruch 5, **dadurch gekennzeichnet dass** das durch die Panzerungsleiste (C) und ihre Verlängerung (1f, 2f, 5f, 7f) gebildete Panzerungselement dieselbe Breite hat wie die Glasplatte (1c, 2c, 5c, 7c) und in deren Höhe bzw. Verlängerung angeordnet ist, wobei in diesem Fall die genannte Glasplatte einfach verkürzt worden ist.

7. Scheibe nach Anspruch 5 in Verbindung mit Anspruch 3, **dadurch gekennzeichnet, dass** das durch die Panzerungsleiste (C) und ihre Verlängerung (3f, 4f) gebildete Panzerungselement eine Breite hat, die kleiner ist als die der genannten Glasplatte (3c, 4c), wobei in diesem Fall die genannte Glasplatte (3c) einfach verkürzt worden ist und der Raum, der normalerweise von dem Glas eingenommen wird, mit klebendem Zwischenmaterial (3d) gefüllt wurde, oder auch die genannte Glasplatte (4c) eine Senkung (4g) umfasst, in der die genannte Verlängerung (4f) der Panzerungsleiste (C) sitzt, wobei die genannte, die Senkung (4g) umfassende Glasplatte (4c) eine größere Dicke haben kann als die anderen Glasplatten des Stapels.

8. Scheibe nach einem der Ansprüche 4 bis 7, **dadurch gekennzeichnet, dass** sie wenigstens eine Panzerungsverstärkungsschicht (2'f) umfasst, die im Innern der plattenförmigen Struktur integriert ist und unabhängig ist, oder nicht, von der Verlängerung der Panzerungsleiste (C).

9. Scheibe nach Anspruch 8 in Verbindung mit Anspruch 3, **dadurch gekennzeichnet, dass** wenigstens eine Panzerungsverstärkungsschicht (2f) im Innern einer klebenden Zwischenschicht (2"d) vorgesehen ist, zwischen zwei Glasplatten (2"c, 2e).

10. Scheibe nach einem der Ansprüche 8 und 9 in Verbindung mit Anspruch 3, **dadurch gekennzeichnet, dass** wenigstens eine Panzerungsverstärkungsschicht in Form eines Einsatzes (5'f) oder eines Keils bzw. Blocks präsent ist, der sich über eine Distanz von höchstens gleich dem Abstand zwischen der Verlängerung (5f) der Panzerungsleiste (C) und der Innenseite der Scheibe erstreckt.

11. Scheibe nach einem der Ansprüche 1 bis 3, **dadurch gekennzeichnet, dass** sie wenigstens eine Panzerungsverstärkungsschicht (6'f, 7'f) umfasst, die mit der Leiste (C) durch einen ringförmigen Teil (6"f ; 7"f) verbunden ist, der sich abstützt auf dem Rand der Scheibe, in Höhe des zentralen ballistischen Systems (BC), wobei die Panzerungsverstärkungsscheibe oder -scheiben (6'f ; 7'f) sich zwischen der Verlängerung der Leiste (C) und der Innenseite der Scheibe befinden und eine (7'f) oder mehrere Panzerungsschichten auf der Innenseite der Scheibe anliegen, wobei die genannte Leiste (C) auch eine Verlängerung (7f) aufweisen kann, welche die Panzerungsverstärkungsschicht im Innem des zentralen ballistischen Systems (BC) bildet, und der genannte ringförmige Teil (6"f ; 7"f) mit der Struktur der Scheibe mittels eines klebenden Zwischenmaterials verbunden ist.

12. Scheibe nach einem der Ansprüche 1 bis 11, **dadurch gekennzeichnet**, das der Vorsprung, der mit der Panzerungsleiste (C) das periphere ballistische System (BP) bildet, an der äußeren Umrandung oder in der Nähe der äußeren Umrandung der Scheibe ausgebildet ist.

13. Scheibe nach einem der Ansprüche 1 bis 12, **dadurch gekennzeichnet, dass** das Material von hoher ballistischer Festigkeit ausgewählt wird unter den Metallen oder Metalllegierungen, den Kunststoff-Fasern-Verbundwerkstoffen und den Keramiken.

14. Scheibe nach einem der Ansprüche 1 bis 13, **dadurch gekennzeichnet, dass** der Stapel eben oder gewölbt ist und von außen nach innen umfasst:
(a) eine Glasplatte, insbesondere vom glaskeramischen Typ, mit geglühtem oder chemisch oder thermisch verstärktem Glas;
(b) eine klebende Zwischenschicht;
(c) eine Glasplatte, insbesondere vom Typ mit geglühtem oder chemisch oder thermisch verstärktem Glas;
(d) eine klebende Zwischenschicht, gegebenenfalls wenigstens einen weiteren Teilstapel des Typs (c), (d) in dieser Reihenfolge; und
(e) eine Polycarbonatschicht,
wobei die klebenden Zwischenschichten insbesondere aus einem Material wie Polyvinylbutyral und Polyurethan sind, der genannte Stapel auch jede traditionelle dünne Funktionsschicht umfassen kann, insbesondere mit kolorierender oder optischer Funktion oder Sonnenschutz-, Verschmutzungsschutz-, Kratzerschutz-, Reif- bzw. Frostschutz-Funktion und/oder jedes leitfähige Antennen- oder Heizdrahtgitter und/oder jeden Umrandungsüberzug aus Email oder opaker Farbe, insbesondere in Form von Punkten.

15. Scheibe nach einem der Ansprüche 1 bis 14, insbesondere dazu bestimmt, eine Kraftfahrzeug-Seitenscheibe zu bilden, **dadurch gekennzeichnet, dass** die Panzerungsverstärkungsschicht oder -schichten sich über eine Distanz in der Größenordnung von 0,5-3 cm in das Innere des zentralen ballistischen Systems (BC) erstrecken.

## Claims

1. Pane of bullet-proof and/or shatter-proof toughened, laminated glass, in which a part of the stack comprising said pane extends, on at least a part of the periphery of the pane, beyond the rest of said stack, thus forming an excrescence against which a reinforcing band (C) made from a high-strength ballistic material is applied, from the inside if the impact is likely to be generated from the outside, being rendered integral with said pane, thus comprising:
- a peripheral ballistic system (BP), formed by said excrescence and said band (C), by means of which system the pane is mounted in the rebate of the structure designed to bear said pane;
- the rest of said pane thus constituting a central ballistic system (BC),
**characterised in that** the central ballistic system (BC) has, at its peripheral region corresponding to that of the reinforcing band (C) of the peripheral ballistic system (BP), one or more reinforcing layers of cladding (1f to 7f; 5'f; 6'f; 7'f), made from a high-strength ballistic material, integrated in the stack constituting said pane, the single reinforcing layer of cladding or at least one of said reinforcing layers of cladding, depending on whether there is one or more, being joined to said band (C), extending the latter.

2. Pane as claimed in claim 1, **characterised in that** the peripheral region of the central ballistic system (BC) corresponding to that of the reinforcing band (C) of the peripheral ballistic system (BP) does not have a reinforcing layer of cladding on the external side of the pane relative to said band (C).

3. Pane as claimed in one of claims 1 and 2, **characterised in that** it is made up of a stack of sheets of glass alternating with intermediate adhesive layers, starting with a sheet of glass (1a to 7a) on the external side and terminating on the internal side with a sheet of glass (1e to 7e), the reinforcing band (C), the reinforcing layer or layers of cladding and, if applicable, the linking elements between said band (C) and said reinforcing layer or layers of cladding being integrated in said pane by means of one or more intermediate adhesive layers or by some of the such layers or by means of an intermediate adhesive material.

4. Pane as claimed in one of claims 1 to 3, **characterised in that** it has a reinforcing layer of cladding (1f to 7f) disposed in the extension of the reinforcing band (C) which is integrally continuous therewith.

5. Pane as claimed in claim 4 in combination with claim 3, **characterised in that** the reinforcing layer of cladding (1f to 7f) forming the extension of the reinforcing band (C) occupies the position which would normally be occupied by a sheet of glass (1c, 2c, 3c, 4c, 5c, 7c) forming part of the central ballistic system (BC) or alternatively may be spaced apart from a sheet of glass (6c).

6. Pane as claimed in claim 5, **characterised in that** the reinforcing element formed by the reinforcing band (C) and its extension (1f, 2f, 5f, 7f) is of the same width as said sheet of glass (1c, 2c, 5c, 7c) and disposed flush with it, in which case said sheet of glass is simply shortened.

7. Pane as claimed in claim 5 in combination with claim 3, **characterised in that** the reinforcing element formed by the reinforcing band (C) and its extension (3f, 4f) has a smaller width than that of said sheet of glass (3c, 4c), in which case, said sheet of glass (3c) has simply been shortened and the space that was normally occupied by the glass is filled with the intermediate adhesive material (3d), or alternatively said sheet of glass (4c) has a spot facing (4g) in which said extension (4f) of the reinforcing band (C) is integrated, in which case said sheet of glass (4c) incorporating the spot facing (4g) may be thicker than the other sheets of glass in the stack.

8. Pane as claimed in one of claims 4 to 7, **characterised in that** it has at least one reinforcing layer of cladding (2'f) which is integrated within the laminated structure and which may or may not be independent of the extension of the reinforcing band (C).

9. Pane as claimed in claim 8 in combination with claim 3, **characterised in that** at least one layer of reinforcing cladding (2f) is disposed within an intermediate adhesive layer (2"d) between two sheets of glass (2"c, 2e).

10. Pane as claimed in one of claims 8 and 9 in combination with claim 3, **characterised in that** at least one reinforcing layer of cladding is provided in the form of an insert (5'f) or a block, which may extend across a distance at most equal to the distance between the extension (5f) of the reinforcing band (C) and the interior side of the pane.

11. Pane as claimed in one of claims 1 to 3, **characterised in that** it has at least one reinforcing layer of cladding (6'f, 7'f) which is joined to the band (C) by an annular part (6"f; 7"f) supported against the periphery of the pane on a level with the central ballistic system (BC), the reinforcing layer or layers of cladding (6'f, 7'f) being disposed between the extension of the band (C) and the interior side of the pane, the or a reinforcing layer of cladding (7'f) may be applied against the interior side of the pane, said band (C) may also have an extension (7f) forming a reinforcing layer of cladding within said central ballistic system (BC), said annular part (6"f, 7"f) being joined to the structure of the pane by means of an intermediate adhesive material.

12. Pane as claimed in one of claims 1 to 11, **characterised in that** the excrescence forming the peripheral ballistic system (BP) in conjunction with the reinforcing band (C) is provided at the external edge or in the vicinity of the external edge of the pane.

13. Pane as claimed in one of claims 1 to 12, **characterised in that** the high-strength ballistic material is selected from the metals and metal alloys, plastics-fibre composite materials and ceramics.

14. Pane as claimed in one of claims 1 to 13, **characterised in that** the stack is flat or cambered and comprises, from the outside to the inside:
(a) a sheet of glass, in particular of the glass ceramic type, annealed glass or chemically or heat-reinforced glass;
(b) an intermediate adhesive layer;
(c) a sheet of glass, in particular of the annealed glass type or glass which has been chemically or heat-reinforced;
(d) an intermediate adhesive layer; if necessary at least one other sub-stack of type (c), (d) **in that** order; and
(e) a layer of polycarbonate,
the intermediate adhesive layers being made in particular from a material such as polyvinyl butyral and polyurethane, said stack optionally also incorporating any conventional functional thin layer, in particular a colouring, optical, anti-glare, anti-dirt, anti-scratch, anti-frost function and/or any network of antenna conductors or heating wires and/or any peripheral cladding of enamel or opaque paint, in particular in the form of dots.

15. Pane as claimed in one of claims 1 to 14, designed in particular as a side window of a motor car, **characterised in that** the reinforcing layer or layers of cladding extend into the central ballistic system (BC) by a distance in the order of 0.5-3 cm.
